# EUROPEAN PATENT SPECIFICATION

(11) **EP 0 484 410 B1**
(45) Date of publication and mention of the grant of the patent: **20.07.1994**
(21) Application number: 90911643.6
(22) Date of filing: 25.07.1990
(51) Int. Cl.: C04B 35/52, F16D 69/02

(54) **CARBON-BRAKE DISK**
KOHLENSTOFF-BREMSSCHEIBE
FREIN A DISQUE EN CARBONE

(30) Priority: 25.07.1989 GB 8917002
(43) Date of publication of application: 13.05.1992
(73) Proprietor: DUNLOP LIMITED, London SW1P 2PL (GB)
(72) Inventor: EVANS, Maurice, James, Fisherwick Lichfield WS14 9JN (GB); FISHER, Ronald, Warwickshire CV22 5LF (GB)
(74) Representative: Badger, John Raymond
(86) International application number: GB9001153
(87) International publication number: WO9101284

(56) References cited:
- DE-A- 2 704 378
- GB-A- 1 587 516
- GB-A- 2 040 805

## Description

This invention relates to a carbon brake disc.

In the manufacture of carbon brake discs by the Chemical Vapour Deposition (CVD) method it is customary to compress a stack of layers of carbon fibre fabric in a suitable jig before loading the stack, in the jig, into the CVD furnace. The jig requires time to assemble and takes up valuable space in the furnace, and one object of the present invention is to provide a preform and method of making a free-standing carbon fibre preform which does not require the use of a jig to maintain compression of the preform whilst in a furnace.

According to one aspect of the present invention there is provided a carbon brake disc comprising a carbon-carbon composite having a reinforcement of carbon fibres derived from a preform of carbon fibres or carbon fibre precursor material and comprising a multilayer compound fabric made of at least l0 layers of plies, each ply comprising a layer of interwoven warp and weft elements, and the warp elements comprise a plurality of strands each comprised of a plurality of individual yarns, said at least l0 plies being disposed one on top of the other so as to define a thickness of said preform, and interconnecting elements of carbon fibres or carbon fibre precursor material passing back and forth through said thickness of the preform to bind together the layers thereof, said interconnecting elements comprising a plurality of strands each comprising a plurality of yarns, and said interconnecting elements extending through substantially the whole axial thickness of the preform.

Preferably the preform is a compound fabric comprising at least 20 plies of carbon fibre or carbon fibre precursor material. Each ply may be of a woven construction but the provision of one or more additional plies of another type of construction, such as a knitted construction, is not excluded.

Typically the elements of the body, and including the interconnecting elements, comprise single, folded or cabled yarns. They may be twisted or may be bereft of twist apart from any necessary producer twist for maintaining the filaments of a yarn together during a weaving or other processing operation.

Yarns may comprise singles yarns or may be folded. The yarns preferably have a twist in the range 80 to 300 turns per metre (t.p.m.).

All the warp and weft elements of each constituent ply of woven fabric in the body and the interconnecting elements which hold the fabric plies together preferably have a tex of greater than 750 and more preferably greater than 1,000.

In each or at least some of the woven fabric plies the warp elements preferably have a tex of greater than three times that of the weft elements.

Positioning of the interconnecting elements may be achieved during a solid weaving operation concurrent with formation of constituent woven plies or it may be achieved by taking a stack of pre-woven plies which are then secured together by the provision of interconnecting elements.

The interconnecting elements extending in a direction through the thickness of a stack of woven fabric plies typically may be provided in pairs arranged to extend side-by-side between a neighbouring pair of warp elements of a ply of the stack. Successive pairs of interconnecting elements may be spaced transversely across the preform by at least one and more typically at least two elements, typically warp yarns, of a woven ply. The elements of said pairs of interconnecting elements may be arranged to extend to and fro through the thickness of the stack of plies in an offset, out-of-phase relationship whereby the two elements are in side-by-side contact only at a position between the surface plies of the stack. Preferably there is a balanced construction in which the side-by-side contact occurs at a position mid-way through the thickness of the stack and such that at a surface ply the elements appear in a uniform alternating disposition.

The elements for the warp of each notional ply of woven fabric and those for interconnecting said plies are of a multi-strand construction. In contrast a yarn element used for the weft of the woven fabric plies typically may be of a single strand construction.

When the woven fabric is formed from yarns of carbon precursor material, said carbon precursor material typically may be of oxidised polyacrylonitrile (PAN). Other suitable carbon precursor materials include pitch and rayon.

The preform may have a thickness of at least 25 mm prior to carbonisation. The carbonised preform may be densified by the Carbon Vapour Deposition technique or the resin/pitch technique followed by charring.

A preform assembly may comprise a plurality of the preforms arranged in a superimposed and interconnected relationship. The preforms may be interconnected for example by bonding or otherwise secured together such as by mechanical fastening means.

One embodiment of the reinforcement of a carbon brake disc of the present invention will now be described, by way of example only, with reference to the accompanying diagrammatic drawings in which:-
- Figure 1: is a cross-section through the thickness of a carbon fibre preform in accordance with the subject the cross-section being taken in a transverse direction perpendicular to the direction in which warp yarns extend in the preform, and
- Figure 2: is a cross-section through the thickness of the preform in a plane perpendicular to that of Figure 1.

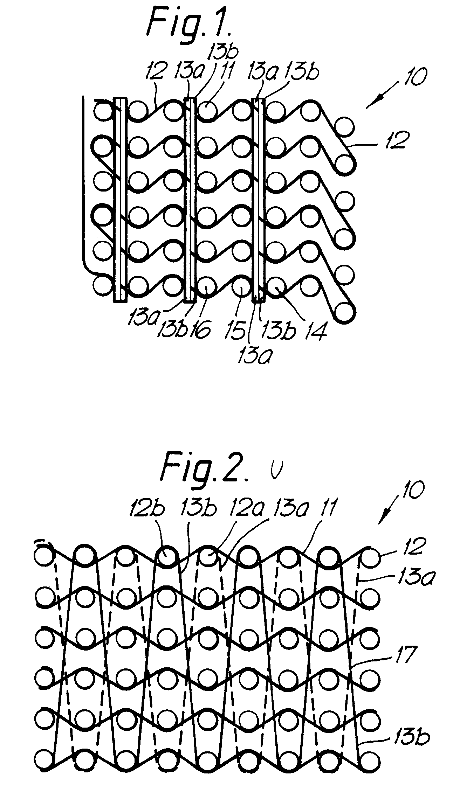

The compound, solid-woven preform shown in Figures 1 and 2 for convenience of illustration has only six interwoven plies though a preform for a carbon brake disc of the invention would have at least ten and typically at least twenty interwoven plies of woven material. In Figures 1 and 2 the yarns are not shown to scale; as described below they are all of a bulky type and in practice occupy a greater proportion of the cross-sectional area than apparent from these Figures.

The preform 10 as illustrated comprises six interwoven fabric plies each having warp elements 11 interwoven with weft elements 12.

The six interwoven plies are interwoven by the individual interlock elements 13a,13b. The interlock elements 13a,13b are provided in side-by-side pairs relationship between neighbouring warp elements (see the two interlock elements 13a,13b provided between the neighbouring warp elements 14,15 of Figure 1), and successive pairs of interlock elements are spaced by two warp elements (see elements 15,16) which lie between successive pairs of the interlock elements 13a,13b.

The interlock elements 13a,13b each extend through the entire thickness of the preform and are uniformly offset in the warp direction. That is, as seen in Figure 2, one of the interlock elements, 13a, extends over the weft element 12a of a woven ply at an upper surface of the preform and the other, second interlock element 13b extends over the next weft element 12b. In consequence the two interlock elements of each pair 13a,13b are in side-by-side contact at a position 17 lying mid-way between the upper and lower surfaces of the preform.

The six plies are woven concurrent with interweaving of the interlock elements to result in one piece of compound fabric.

The warp elements 11 are each yarns of a multi- stranded construction wherein each strand comprises a plurality of yarns. Each warp yarn is composed of four strands laid together with little or no folding twist and the yarn assembly of the strands has a tex of 5352. Thus, each strand has a tex of 1338. Each strand in turn is composed of 15 individual yarns, the individual yarns having a tex of 89.2. The filaments of each individual yarn have a twist of 270 t.p.m. and the individual yarns of each strand have a twist of 80 t.p.m..

The weft elements 12 are comprised by yarns of a single strand construction, corresponding to one of the four strands of the warp yarn, and has the same tex, i e 1338. Similarly, the strand is made up of 15 individual yarns each of tex 89.2. The twist levels in the strand and individual yarns also corresponds.

The interlocking elements 13a,13b are of like construction and are in the form of yarns which have a tex of 1822. Each interlocking yarn comprises three strands each of 607 tex and each such strand is formed from seven individual yarns each of 86.7 tex. The filaments of each individual yarn have a twist of 270 t.p.m., the individual yarns have a twist of 80 t.p.m. in each strand and each strand has a negligible twist in the interlocking yarn.

A compound fabric constructed as described above from oxidised pan yarns had an initial thickness of 21 mm (for six plies) and a fibre volume of 47%. This fabric was then carbonised at a temperature of 1020[deg]C for four hours under a load of 0.5 lb/sq in (0.0034 MPa). After carbonising the fabric had a thickness of 17.25 mm and a fibre volume of 27%. The resulting carbonised preform was then subject to densification either by CVD or resin/pitch impregnation followed by charring to produce a carbon-carbon composite, and without any need for provision of conventional jig means.

## Claims

1. A carbon brake disc comprising carbon-carbon composite having a reinforcement of carbon fibres derived from a preform (10) of carbon fibres or carbon fibre precursor material characterised in that it comprises a multilayer compound fabric made of at least ten layers of plies, each ply comprising a layer of interwoven warp and weft elements (11,12), and the warp elements (11) comprising a plurality of strands each comprised of a plurality of individual yarns, said at least ten plies being disposed one on top of the other so as to define a thickness of said preform, and interconnecting elements (13a,13b) of carbon fibres or carbon fibre precursor material passing back and forth through said thickness of the preform (10) to bind together the layers thereof, said interconnecting elements (13a,13b) comprising a plurality of strands each comprising a plurality of yarns, and said interconnecting elements extending through substantially the whole axial thickness of the preform.

2. A carbon brake disc according to claim l characterised in that the interconnecting elements (13a,13b) are provided in pairs arranged to extend side-by-side between neighbouring pairs of warp elements (15,16).

3. A carbon brake disc according to claim 2 characterised in that the elements (13a,13b) of a pair of interconnecting elements extend to and fro through the thickness of said preform in an offset, out-of-phase relationship in which the two elements are in side-by-side contact only at a position (17) substantially mid-way between the surfaces of the preform.

4. A carbon brake disc according to any one of the preceding claims characterised in that elements (11,12,13a,13b) of said layers of plies and interconnecting elements each have a tex greater than 750.

5. A carbon brake disc according to claim 4 characterised in that the warp and weft elements (11,12) of a ply and the interconnecting elements each have a tex of greater than l,000.

6. A carbon brake disc according to any one of the preceding claims characterised in that a weft yarn (12) of a woven fabric ply comprises a single strand of a plurality of individual yarns.

7. A carbon brake disc according to any one of the preceding claims characterised in that said reinforcement is derived from a preform assembly comprising a plurality of said preforms (10) arranged in a superimposed interconnected relationship.

8. A carbon brake disc according to claim 7 characterised in that said superimposed preforms are interconnected by bonding.

9. A carbon brake disc according to claim 7 characterised in that said superimposed preforms are interconnected by mechanical fastening means.

10. A carbon brake disc according to any one of the preceding claims characterised in that the warp elements (11) of a ply have a tex of greater than three times that of the weft elements.

## Patentansprüche

1. Kohlenstoffbremsscheibe aus einem Kohlenstoff-Kohlenstoff-Verbundmaterial mit einer aus Kohlenstoffasern gebildeten Verstärkung, die von einer Vorform (10) aus Kohlenstoffasern oder einem Kohlenstoffaservorläufermaterial abgeleitet ist,
dadurch **gekennzeichnet,**
daß sie folgendes aufweist: ein mehrlagiges Verbundgewebe aus wenigstens zehn Lagen, wobei jede Lage aus miteinander verwebten Kett- und Schußelementen (11, 12) und die Kettelemente (11) aus mehreren Strängen bestehen, von denen jeder mehrere Einzelgarne aufweist, wobei die wenigstens zehn Lagen so aufeinander angeordnet sind, daß sie die Dicke der Vorform bilden, und aus Kohlenstoffasern oder einem Kohlenstoffaservorläufermaterial bestehende Verbindungselemente (13a, 13b), die sich durch die Dicke der Vorform (10) hin und her erstrecken und deren Lagen zusammenbinden, wobei die Verbindungselemente (13a, 13b) aus mehreren Strängen mit jeweils mehreren Garnen bestehen und sich im wesentlichen durch die ganze axiale Dicke der Vorform erstrecken.

2. Kohlenstoffbremsscheibe nach Anspruch 1, dadurch gekennzeichnet, daß die Verbindungselemente (13a, 13b) als Paare angeordnet sind, die sich nebeneinander zwischen benachbarten Paaren von Kettelementen (15, 16) erstrecken.

3. Kohlenstoffbremsscheibe nach Anspruch 2, dadurch gekennzeichnet, daß die Elemente (13a, 13b ) eines Paars von Verbindungselementen sich durch die Dicke der Vorform versetzt und außer Phase hin und her erstrecken, wobei die beiden Elemente nur an einer Stelle (17) im wesentlichen auf halbem Weg zwischen den Oberflächen der Vorform nebeneinander in Berührung stehen.

4. Kohlenstoffbremsscheibe nach einem der vorhergehenden Ansprüche, dadurch gekennzeichnet, daß die Elemente (11, 12, 13a, 13b) der Lagen und die Verbindungselemente jeweils ein Tex von über 750 haben.

5. Kohlenstoffbremsscheibe nach Anspruch 4, dadurch gekennzeichnet, daß die Kett- und Schußelemente (11, 12) einer Lage und die Verbindungselemente jeweils ein Tex von über 1000 haben.

6. Kohlenstoffbremsscheibe nach einem der vorhergehenden Ansprüche, dadurch gekennzueichnet, daß ein Schußgarn (12) einer Gewebelage einen einzigen Strang aus mehreren Einzelgarnen enthält.

7. Kohlenstoffbremsscheibe nach einem der vorhergehenden Ansprüche, dadurch gekennzeichnet, daß die Verstärkung aus einer Vorformanordnung abgeleitet ist, die mehrere übereinander liegende, miteinander verbundene Vorformen (10) enthält.

8. Kohlenstoffbremmsscheibe nach Anspruch 7, dadurch gekennzeichnt, daß die übereinander liegenden Vorformen durch Kleben miteinander verbunden sind.

9. Kohlenstoffbremsscheibe nach Anspruch 7, dadurch gekennzeichnet, daß die übereinander liegenden Vorformen durch mechanische Befestigungsmittel miteinander verbunden sind.

10. Kohlenstoffbremsscheibe nach einem der vorhergehenden Ansprüche, dadurch gekennzeichnet, daß die Kettelemente (11) einer Lage ein Tex von über dem Dreifachen desjenigen der Schußelemente haben.

## Revendications

1. Disque de frein au carbone constitué d'un composite carbone-carbone comportant un renforcement en fibres de carbone obtenu à partir d'une ébauche (10) en fibres de carbone ou en un matériau précurseur de fibres de carbone, caractérisé en ce qu'il comporte un tissu composé à couches multiples constitué d'au moins dix couches de plis, chaque pli comportant une couche d'éléments de chaîne et de trame entrelacés (11, 12), et les éléments de chaîne (11) comprenant plusieurs torons respectivement constitués de plusieurs fils individuels, étant précisé que lesdits dix plis sont disposés les uns au-dessus des autres afin de définir une épaisseur de ladite ébauche, et des éléments d'interconnexion (13a, 13b) en fibres de carbone ou en un matériau précurseur de fibres de carbone qui traversent ladite épaisseur de l'ébauche (10) suivant un mouvement de va-et-vient pour lier les couches de celle-ci entre elles, lesdits éléments d'interconnexion (13a, 13b) comprenant plusieurs torons respectivement constitués de plusieurs fils et s'étendant à travers sensiblement la totalité de l'épaisseur axiale de l'ébauche.

2. Disque de frein au carbone selon la revendication 1, caractérisé en ce que les éléments d'interconnexion (13a, 13b) sont disposés par paires agencées pour s'étendre côte à côte entre des paires voisines d'éléments de chaîne (15, 16).

3. Disque de frein au carbone selon la revendication 2, caractérisé en ce que les éléments (13a, 13b) d'une paire d'éléments d'interconnexion s'étendent suivant un mouvement de va-et-vient à travers l'épaisseur de ladite ébauche dans une relation décalée et déphasée dans laquelle les deux éléments sont en contact côte à côte uniquement au niveau d'une position (17) située sensiblement à mi-distance entre les surfaces de l'ébauche.

4. Disque de frein au carbone selon l'une quelconque des revendications précédentes, caractérisé en ce que les éléments (11, 12, 13a, 13b) desdites couches de plis et les éléments d'interconnexion ont respectivement un tex supérieur à 750.

5. Disque de frein au carbone selon la revendication 4, caractérisé en ce que les éléments de chaîne et de trame (11, 12) d'un pli et les éléments d'interconnexion ont respectivement un tex supérieur à 1000.

6. Disque de frein au carbone selon l'une quelconque des revendications précédentes, caractérisé en ce qu'un fil de trame (12) d'un pli de tissu tissé se compose d'un toron unique constitué de plusieurs fils individuels.

7. Disque de frein au carbone selon l'une quelconque des revendications précédentes, caractérisé en ce que ledit renforcement est obtenu à partir d'un ensemble d'ébauches comprenant plusieurs desdites ébauches (10) disposées dans une relation dans laquelle elles sont superposées et reliées les unes aux autres.

8. Disque de frein au carbone selon la revendication 7, caractérisé en ce que lesdites ébauches superposées sont reliées les unes aux autres par un assemblage par adhérence.

9. Disque de frein au carbone selon la revendication 7, caractérisé en ce que lesdites ébauches superposées sont reliées les unes aux autres par des moyens de fixation mécaniques.

10. Disque de frein au carbone selon l'une quelconque des revendications précédentes, caractérisé en ce que les éléments de chaîne (11) d'un pli ont un tex supérieur à trois fois celui des éléments de trame.
